# EUROPÄISCHE PATENTSCHRIFT

(11) **EP 4 248 552 B1**
(45) Veröffentlichungstag und Bekanntmachung des Hinweises auf die Patenterteilung: **28.08.2024**
(21) Anmeldenummer: 22717619.5
(22) Anmeldetag: 25.03.2022
(51) Int. Cl.: H02K 3/38, H02K 15/10, H02K 15/12

(54) **STATOR FÜR EINE ELEKTRISCHE ROTATORISCHE MASCHINE**
STATOR FOR AN ELECTRIC ROTATING MACHINE
STATOR POUR UNE MACHINE TOURNANTE ÉLECTRIQUE

(30) Priorität: 31.03.2021 EP 21166276
(43) Veröffentlichungstag der Anmeldung: 27.09.2023
(73) Patentinhaber: Innomotics GmbH, 90441 Nürnberg (DE)
(72) Erfinder: KATZENBERGER, Tobias, 97631 Bad Königshofen STT Untereßfeld (DE); PLOCHMANN, Bastian, 91413 Neustadt an der Aisch (DE)
(74) Vertreter: Siemens Patent Attorneys
(86) Internationale Anmeldenummer: PCT/EP2022/057863
(87) Internationale Veröffentlichungsnummer: WO 2022/207475

(56) Entgegenhaltungen:
- EP-A1- 3 772 158
- DE-A1- 102005 017 113
- DE-A1- 3 133 734

## Beschreibung

Die Erfindung betrifft ein Verfahren zum Vergießen eines Wickelkopfs eines Stators einer elektrischen Maschine, wobei der Stator ein Blechpaket mit Nuten und einen Wickelkopf aufweist, wobei in die Nuten Wicklungen eingebracht sind, wobei der Wickelkopf aus aus den Nuten austretenden Wicklungsenden gebildet ist und einen Abstand zu einem Blechpaketende aufweist, wobei die Wicklungsenden in einem Bereich zwischen dem Blechpaketende und dem Wickelkopf derart verlaufen, dass in diesem Bereich zwischen den (einzelnen) Wicklungsenden Zwischenräume entstehen.

Eine elektrische vorzugsweise rotatorische Maschine mit dem vorgenannten Stator bzw. mit einem Stator, der nach dem vorgenannten Verfahren hergestellt ist oder dessen Wickelkopf nach dem vorgenannten Verfahren vergossen ist. Die elektrische rotatorische Maschine ist vorzugsweise ein Motor.

Die Statoren und die Wickelkopfvergussverfahren der eingangs genannten Art sind aus dem Stand der Technik hinlänglich bekannt. Niederspannungsmotoren der Leistungsklassen 0,5kW bis 2000kW werden aus Kostengründen mittels Kalttauchverfahren, bzw. Heißtauchverfahren (z.B. Strom-UV-Verfahren) imprägniert. Hierbei werden die Statoren in ein Becken mit Flüssigharz getaucht und im Anschluss thermisch gehärtet. Die geometrischen Zwischenräume der Kupferwicklung werden hierbei großteils mit Harz gefüllt und somit verfestigt, elektrisch zusätzlich isoliert und thermisch mit dem Blechpaket verbunden. In den stirnseitigen Bereichen der Statoren befinden sich die Wickelköpfe, also die notwendigen Kupferstränge, welche die aktiven Bereiche in den Nuten miteinander verbinden. Die Wickelköpfe werden vor dem Imprägnierverfahren nochmals mittels Flächenisolierstoffen (z.B. Einlege-Papiere) ausgestattet, um die Phasen des Motors (z.B. 3 Phasen) elektrisch voneinander zu isolieren, sowie im Form gepresst, komprimiert und bandagiert, um die geometrischen Maße einzuhalten und die vorgesehene Baulänge nicht zu überschreiten (Welle, Rotor, Lagerschild). Eine thermische Anbindung der Wickelköpfe zum Aluminiumgehäuse ist standardmäßig ausschließlich über einen Luftraum/Luftspalt gegeben, welcher mit strömender (konvektiver) Luft gefüllt ist. Die Entwärmung des Wickelkopfes geschieht somit sehr schlecht über die thermischen Kontaktübergänge von Wicklung zur Luft und weiter von Luft auf Aluminium-Gehäuse. Dies ist dahingehend als kritischer und limitierender Faktor der Leistungsklasse des Motors anzusehen, da insbesondere im Wickelkopf sogenannte Hotspots entstehen, d.h. durch sehr hohe Stromstärke (Joulsche Erwärmung) und der zusätzlich geometrisch und mechanisch notwendigen Verdichtung und Fixierung der Drahtbündel, Bereiche entstehen, die deutlich heißer werden als innerhalb der Statornuten. In den Statornuten ist die Entwärmung über das umliegende Eisenblech sehr effizient gegeben. Eine bessere Entwärmung der Wickelköpfe und somit der Wärmeklassen/Leistungsklassen limitierenden Bereiche des Motors ist somit die Problemstellung.

Um diesem Problem zumindest teilweise entgegenzutreten, können innerhalb der Motoren, z.B. Niederspannungsmotoren durch Flügelräder vorgesehen sein, die eine Entwärmung bewerkstelligen. Das ist eine der günstigsten Varianten. Die Flügelräder sind direkt auf die Welle montiert und treiben in Proportion zur Drehzahl des Motors die Luftkonvektion an, so dass Gehäuse von außen beziehungsweise dessen Kühlrippen mit konvektiver Luft umspült wird beziehungsweise werden. Diese Belüftung wirkt sich jedoch wiederum negativ auf die Leistung bzw. den Wirkungsgrad der Motoren aus und ist fertigungs- und produkttechnisch aufwendig/kostenintensiv. Außerdem wird der Wickelkopf hier nicht aktiv gekühlt, da lediglich die Wärme vom Gehäuse abgeführt werden kann.

Sind aufgrund höherer Leistungsanforderungen bessere Entwärmungseigenschaften notwendig, so muss der Wickelkopf mittels eines sogenannten Wickelkopfvergusses an das Aluminiumgehäuse thermisch angebunden werden. Hierbei handelt es sich um einen mit wärmeleitfähigen Partikeln gefüllten Formstoff (Reaktivharz, z.B. Epoxy, Polyurethan oder Polyester. Die Füllstoffpartikel sind je nach gewünschter Wärmeleitfähigkeit und gewünschtem Preisniveau des Formstoffes aus Quarzmehl, Quarzgut, Bornitrid oder Aluminiumoxid (Liste nicht vollständig) in einer optimierten Korngrößenverteilung als Mikropartikel in der Matrix (Reaktivharz) dispergiert, sodass eine noch möglichst dünnflüssige, fließfähige Formmasse vorhanden ist. Der Füllgrad des Füllstoffes in der Matrix beträgt zwischen 20 und 70 Vol.-%, je nach gewünschter Fließfähigkeit bei Verarbeitungstemperatur - also prozessabhängig.

Neben den Materialkosten sind die Prozesskosten eines Wickelkopfvergusses deutlich markanter, da die imprägnierten Statoren aus dem Standardfertigungsfluss ausgeschleust werden müssen und mittels Vergussformen für den Wickelkopfverguss vorbereitet werden müssen (erst eine Seite, dann die andere). Hierbei wird eine Art Innendorn in die Bohrung des Stators formschlüssig eingebracht, um Benetzen der Innenbohrung mit der Vergussmasse zu verhindern. Anschließend wird der Stator ggf. auf eine erhöhte Temperatur erhitzt (z.B. 80°C um die Fließfähigkeit der Vergussmasse zu verbessern). Im Anschluss wird die Vergussmasse in das so eingehauste Wickelkopfreservoir gegossen. Im Anschluss wird die Masse über mehrere Stunden bei ca. 150°C hinweg z.B. im Heißluftofen gehärtet. Nach der Härtung (und der Abkühlung) wird die jeweils andere Wickelkopfseite ebenso vergossen). Der Vergusskörper umschließt somit nach den beiden Einzelprozessen beide Wickelköpfe sowohl radial innenseitig, als auch radial außenseitig, wohingegen der Wärmefluss beim geschlossenen Motor großteils radial nach außen hin zum Aluminiumgehäuse geschieht. Die vollständige Umschließung ist vielmehr ein Prozess-geschuldetes Phänomen, da der innenliegende Dorn als Gehäusewandung dient und im Anschluss entfernt und gereinigt werden muss.

In Summe handelt es sich bei dem Wickelkopfverguss um einen sehr aufwändigen Prozess (Zeit, Energie und Materialkosten), welcher zudem mehr Material in den Motor bringt, als tatsächlich für die angestrebte Eigenschaft notwendig wäre (Entwärmung des Wickelkopfes in Richtung Gehäuse, radial nach au-βen).

In der DE 10 2005 017 113 A1 ist eine Schutzschichtanordnung für einen Wickelkopf einer elektrischen Maschine bestimmt. Sie hat eine erste und eine zweite Deckschicht. Die erste und die zweite Deckschicht umschließen eine elektrische Leiteranordnung des Wickelkopfs. Die erste Deckschicht besteht aus einem im gesamten Anwendungstemperaturbereich gelartigen und selbstheilenden Polymermaterial. Die zweite Deckschicht umgibt die erste Deckschicht unmittelbar. Sie besteht aus einem härteren Material als die erste Deckschicht.

Die Aufgabe der vorliegenden Erfindung kann somit darin gesehen werden, ein Wickelkopfvergussverfahren bereitzustellen, das kostensparend vereinfacht werden kann.

Die Aufgabe wird mit einem eingangs genannten Verfahren gemäß des unabhängigen Anspruchs 1 erfindungsgemäß dadurch gelöst, dass zumindest einer der Zwischenräume mit einer Polymerschicht derart überspannt ist, dass ein Durchfluss von flüssigem Medium durch den zumindest einen überspannten Zwischenraum durch verhindert ist.

Dass der Wickelkopf einen Abstand zu dem Blechpaketende aufweist, bedeutet, dass es Wicklungsabschnitte gibt, die zwischen dem Wickelkopf und dem Blechpaket liegen und somit weder in dem (später zu vergießenden) Wickelkopf noch in dem Blechpaket liegen.

Somit wird ein Verfahren bereitgestellt, bei dem Wickelkopfverguss ohne Zusatzwerkzeug erfolgen kann.

Bei einer Ausführungsform kann es zweckmäßig sein, wenn alle Zwischenräume mit der Polymerschicht überspannt sind.

Bei einer Ausführungsform kann vorgesehen sein, wenn die Polymerschicht statorinnenseitig und/oder statoraußenseitig angebracht ist.

Bei einer Ausführungsform kann vorgesehen sein, dass der Kunststoffkleber in Form von Fäden aufgespritzt ist, so dass die Fäden in Form überlappender Schleifen aufeinander aufgeschleudert sind und eine Netzstruktur bilden, wobei die Netzstruktur den zumindest einen der Zwischenräume überspannt.

Die Aufgabe wird außerdem mit einem eingangs genannten Verfahren zum Herstellen eines Stators erfindungsgemäß dadurch gelöst, dass zumindest einer der Zwischenräume mit einer Polymerschicht derart abgedeckt wird, dass ein Durchfluss von flüssigem Medium durch den zumindest einen abgedeckten Zwischenraum durch verhindert wird.

Bei einer Ausführungsform kann vorgesehen sein, dass die Polymerschicht durch Aufspritzen und/oder Aufschleudern und/oder Aufsprühen eines klebstoffhaltigen Mediums mittels einer Düse erzeugt wird.

Bei einer Ausführungsform kann zweckmäßig sein, wenn während des Erzeugens die Düse derart verfahren wird, dass das klebstoffhaltige Medium durch die Verfahrbewegung der Düse derart schichtweise und flächendeckend aufgetragen wird, dass das klebstoffhaltige Medium den zumindest einen Zwischenraum überspannt.

Bei einer Ausführungsform kann vorgesehen sein, dass das klebstoffhaltige Medium einen thermoplastischen Schmelzklebstoff umfasst.

Bei einer Ausführungsform kann mit Vorteil vorgesehen sein, dass mittels einer Düse ein Faden eines thermoplastischen Schmelzklebstoffs erzeugt wird, während des Erzeugens die Düse derart verfahren wird, dass der Faden durch die Verfahrbewegung der Düse derart aufgetragen wird, dass der Faden in Form überlappender Schleifen und/oder Schlingen aufgeschleudert wird, um eine Netzstruktur zu bilden, wobei die Netzstruktur den zumindest einen der Zwischenräume überspannt.

Bei einer Ausführungsform kann vorgesehen sein, dass der Faden schichtweise und flächendeckend in Form von Schlingen aufgetragen wird.

Bei einer Ausführungsform kann vorgesehen sein, dass alle Zwischenräume mit einer Polymerschicht abgedeckt werden.

Bei einer Ausführungsform kann vorgesehen sein, dass die Polymerschicht statorinnenseitig und/oder statoraußenseitig angebracht wird.

Beim statorinnenseitigen Anbringen der Polymerschicht kann der Stator bereits im Gehäuse eingehaust sein.

Beim statoraußenseitig Anbringen der Polymerschicht kann kein Polymermaterial auf die Innenseite des Stators gelangen.

Bei einer Ausführungsform kann vorgesehen sein, dass das Auftragen des thermoplastischen Schmelzklebstoffs vollautomatisch, insbesondere mit einem Roboter erfolgt.

Bei einer Ausführungsform kann vorgesehen sein, dass die Polymerschicht nach dem Vergießen und Aushärten der Vergussmasse zumindest teilweise entfernt wird.

Bei einer Ausführungsform kann es zweckdienlich sein, wenn beide Wickelköpfe des Stators wie oben beschrieben mit einer Polymerschicht versehen und vorzugsweise vergossen werden.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1: einen vergrößerten Ausschnitt eines Stators einer rotatorischen elektrischen Maschine in perspektivischer Ansicht,
- FIG 2: einen Schnitt durch das Blechpaket aus FIG 1,
- FIG 3: einen vergrößerten Ausschnitt der FIG 1,
- FIG 4: einen Wickelkopfvergussprozess nach dem Stand der Technik,
- FIG 5 bis 7: verschiedene Verfahrensschritte eines Wickelkopfvergussverfahrens, und
- FIG 8: ein Flussdiagramm des Wickelkopfvergussverfahrens.

In den Ausführungsbeispielen und Figuren können gleiche oder gleich wirkende Elemente jeweils mit den gleichen Bezugszeichen versehen sein. Die Bezugszeichen sind lediglich zur Vereinfachung der Findung der mit den Bezugszeichen versehenen Elemente vorgesehen und haben keine einschränkende Wirkung auf den unter den Schutz gestellten Gegenstand inne.

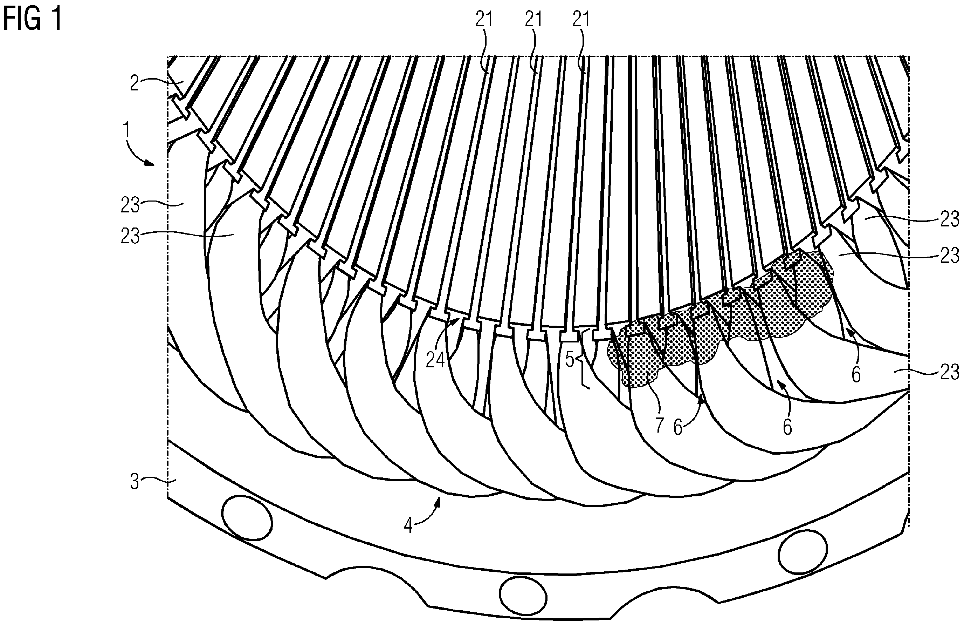

FIG 1 zeigt beispielhaft einen vergrößerten Ausschnitt eines Stators 1 einer rotatorischen elektrischen Maschine in perspektivischer Ansicht, sodass die Innenseite nicht aber die Außenseite des Stators 1 zu sehen ist. Die elektrische Maschine kann im Einzelfall als lineare elektrische Maschine ausgebildet sein. Andere üblicherweise vorhandene Komponenten der elektrischen rotatorischen Maschine, wie z.B. Rotor, Rotorwelle, Lagerschilde etc., sind in FIG 1 nicht dargestellt.

Der Stator 1 weist ein Blechpaket 2 mit einer Vielzahl von einzelnen Statorblechen auf.

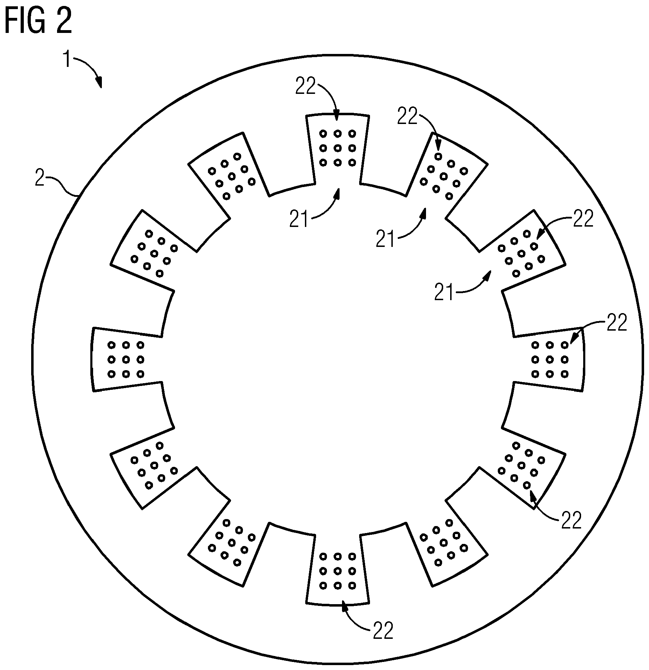

FIG 2 zeigt einen Schnitt durch das Blechpaket 2. Aus FIG 2 ist insbesondere erkennbar, dass in das Blechpaket 2 (statorinnenseitig) Nuten 21 eingebracht sind. Das Herstellen des Blechpakets 2 erfolgt auf konventionelle Art und Weise und muss daher nicht näher erläutert werden.

Die Nuten 21 können - wie allgemein üblich - dadurch in das Blechpaket 2 eingebracht werden, dass bereits die Statorbleche entsprechend ausgestanzt werden.

In die Nuten 21 sind Wicklungen 22 eines Statorwicklungssystems eingebracht. Die Wicklungen 22 können ein mehrphasiges, beispielsweise ein dreiphasiges Statorwicklungssystem bilden. Die Wicklungen 22 der einzelnen Phasen werden in der Regel sequenziell nacheinander in die Nuten 21 eingebracht. Das Einführen der Wicklungen 22 als solches erfolgt auf konventionelle Art und Weise und muss daher nicht näher erläutert werden. Die Wicklungen 22 können nach Bedarf als sogenannte wilde Wicklungen oder als sogenannte gelegte Wicklungen ausgebildet sein. Die Wicklungen 22, z.B. Runddrähte, Lackdrähte, können beispielsweise als Kupferstränge aus einer Vielzahl von Kupferdrähten gebildet sein.

FIG 1 lässt weiterhin erkennen, dass der Stator 1 in ein Gehäuse 3, z.B. aus Aluminium gefügt ist.

FIG 1 zeigt einen Wickelkopf 4 des Stators 1. Der andere Wickelkopf liegt auf einem dem in FIG 1 gezeigten Ende des Stators 1 gegenüberliegenden Ende und ist der Einfachheit halber nicht dargestellt.

Der Wickelkopf 4 wird durch freie, nicht in die Nuten 21 eingebrachte Wicklungensenden 23 gebildet. Dabei werden die aus den Nuten 21 in Längsrichtung des Stators 1 hervorspringenden Wicklungensenden 23 in einem Abstand 5 von einem Blechpaketende 24 (einer Stirnseite des Stators 1) zu dem Wickelkopf 4 zusammengefasst beziehungsweise zusammengebunden. Das Zusammenbinden kann beispielsweise mit einem Klebeband o.Ä. erfolgen. Das Bilden des Wickelkopfes 4 aus den Wicklungensenden 23 als solches erfolgt auf konventionelle Art und Weise und muss daher nicht näher erläutert werden.

Der Abstand 5 kann beispielsweise etwa 5 mm bis 150 mm betragen, je nach Größe des Stators 1.

Zwischen dem Blechpaketende 24 und dem Wickelkopf 4 verlaufen die Wicklungenenden 23 in etwa parallel zueinander und auch in etwa parallel zu der Längsachse des Stators 1.

FIG 1 ist weiterhin zu entnehmen, dass die Wicklungen 22 außerhalb des Blechpakets 2 in Umfangsrichtung des Stators 1 beziehungsweise des Wickelkopfes 4 voneinander beabstandet sind, sodass zwischen den Wicklungen 22 Zwischenräume 6 gebildet sind.

Von den Nuten 21, den Wicklungen 22, den Wicklungsenden 23 und den Zwischenräumen 6 sind in den Figuren nur einige wenige mit ihrem Bezugszeichen versehen, um die Figuren nicht unnötig zu überfrachten.

Die Zwischenräume 6, vorzugsweise alle Zwischenräume 6 sind mit einer Polymerschicht 7 überspannt beziehungsweise abgedeckt beziehungsweise bedeckt. Die Polymerschicht 7 haftet vorzugsweise ohne weitere Hilfs-/Haftmittel an den Wicklungsenden 23.

Die Polymerschicht 7 kann eine Dicke von etwa 0,1 mm bis 3 mm aufweisen, vorzugsweise zwischen 0,5 mm und 1,5 mm, beispielsweise in etwa 1,0 mm aufweisen.

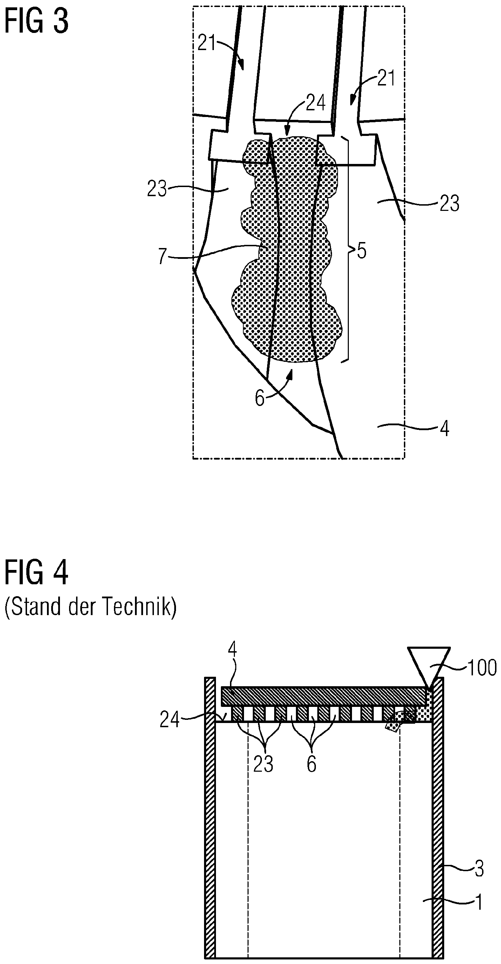

FIG 3 zeigt einen vergrößerten Ausschnitt der FIG 1. FIG 3 lässt erkennen, dass ein Zwischenraum 6 zwischen den Wicklungsenden 23 mit der Polymerschicht 7 überspannt beziehungsweise abgedeckt beziehungsweise bedeckt ist. Die Polymerschicht kann sich in Umfangsrichtung des Stators 1 zumindest zwischen den beiden benachbarten Wicklungsenden 23 und in Längsrichtung des Stators 1 vom Blechpaketende 24 bis zum Wickelkopf 4 erstrecken, um die Zwischenräume derart abzudecken, dass kein Durchfluss von flüssigem Medium, insbesondere von Wickelkopf-Vergussmasse, durch den Zwischenraum 6 durch (also von Statoraußenseite zu der Statorinnenseite oder umgekehrt) mehr möglich ist.

Die Polymerschicht 7 überspannt und verschließt somit den Zwischenraum 6 und haftet an beiden Wicklungsenden 23, durch die der Zwischenraum 6 gebildet ist.

Als Wickelkopf-Vergussmasse oder einfach Vergussmasse kann z.B. flüssiger Formstoff mit wärmeleitfähigen Partikeln verwendet werden. Der Formstoff kann beispielsweise Reaktivharz, z.B. Epoxy, Polyurethan oder Polyester. Die als Mikropartikel in der Matrix eingebetteten wärmeleitfähigen Partikeln können beispielsweise Quarzmehl-, Quarzgut-, Bornitrid- oder Aluminiumoxid-Partikeln sein. Diese Aufzählungen der Materialien sind nicht vollständig.

Auf die beschriebene Weise überspannt die Polymerschicht 7 vorzugsweise jeden Zwischenraum 6.

Beispielsweise erstreckt sich die Polymerschicht 7 in die Längsrichtung des Stators für etwa 5 mm bis 150 mm je nach Größe des Stators 1.

Dabei kann die Polymerschicht 6 die Zwischenräume statorinnenseitig (wie in FIG 1 und FIG 3 gezeigt) und/oder statoraußenseitig (nicht gezeigt) überspannen beziehungsweise abdecken.

Beispielsweise kann die Polymerschicht als ein Band ausgebildet sein, welches eine Breite größer-gleich (≥) als der Abstand 5 aufweist. Darüber hinaus kann das Band in sich geschlossen sein, so dass es einen statorinnenseitigen und/oder statoraußenseitigen Bereich überspannt beziehungsweise abdeckt beziehungsweise bedeckt, an welchen Bereich die Zwischenräume 6 angrenzen. Die Polymerschicht 7 kann somit als ein statorinnenseitiger und/oder statoraußenseitiger Kragen ausgebildet sein.

Vorzugsweise ragt die Polymerschicht 7 nicht in die für einen Rotor vorgesehene Bohrung des Stators 1 hinein.

Die Polymerschicht 7 kann ausgehärteten Kunststoffkleber umfassen, vorzugsweise aus dem ausgehärteten Kunststoffkleber bestehen.

Beispielsweise kann thermoplastischer Schmelzklebstoff, z.B. Polyolefin oder Polyamid verwendet werden. Konkret wurden gute Ergebnisse erzielt mit den Materialien 3M Scotch Weld 3731, 3789 und 3779 der Firma 3M, wobei das erstgenannte Material ein Polyolefin ist und die beiden anderen Materialien Polyamide sind.

Dabei kann der Kunststoffkleber in Form von Fäden aufgespritzt sein, so dass die Fäden in Form überlappender Schleifen aufeinander aufgeschleudert sind und eine Netzstruktur bilden, die den Zwischenraum 6 oder die Zwischenräume 6 überspannt. Die Fäden können einen Durchmesser ca. 50-500pm aufweisen.

Die Polymerschicht 7 kann an den Wicklungsenden 23 ohne weitere Hilfs-/Haftmittel haften. Dies bedeutet insbesondere, dass es keiner weiteren Kleberschicht o.Ä. bedarf, damit die Polymerschicht 7 an den Wicklungsenden 23 haftet und die Zwischenräume 6 und die Innenseite beziehungsweise die Bohrung des Stators 1 flüssigdicht macht.

Die Polymerschicht 7 kann auch RT (Raumtemperatur, ca. 25°C) härtende ausgehärtete Klebstoffe umfassen beziehungsweise aus solchen ausgebildet sein. Der verwendete Kunststoffkleber kann eine Faserverstärkung umfassen. Die Polymerschicht 7 kann durch Aufsprühen des Kunststoffklebers gebildet sein und beispielsweise Form einer Sprühtapete aufweisen. Der Kunststoffkleber kann chemisch härtend sein, so z.B. können Duromere Kunststoffe verwendet werden, die beispielsweise UVhärtend sind. Es können physikalisch härtende Kunststoffe als Kunststoffkleber verwendet werden. Es können gefüllte Kunststoffe (Fasern, Partikeln) als Kunststoffkleber verwendet werden, sofern diese applizierbar bleiben, z.B. in Form einer Sprühtapete. Es können auch lösemittelhaltige Kunststoffe als Kunststoffkleber verwendet werden, welche sich durch Verdunstung des Lösemittels verfestigen (z.B. Haarlack, PVA). Es können Reaktivharze (z.B. Epoxy, PEI, PU) als Kunststoffkleber verwendet werden.

Obwohl in FIG 1 und 3 nur auf den Wickelkopf 4 Bezug genommen wird, versteht es sich, dass ein dem Wickelkopf 4 gegenüberliegenden Wickelkopf ebenfalls eine Polymerschicht aufweisen kann, die auf die gleiche Weise wie die oben beschriebene Polymerschicht 7 angeordnet sein kann und die entsprechenden Zwischenräume überspannt, um Durchfluss von flüssigem Medium in die für den Rotor vorgesehene Statorbohrung zu vermeiden.

FIG 4 verdeutlicht die in der Beschreibungseinleitung erwähnten Probleme des Standes der Technik. FIG 4 lässt den Stator 1 der Figuren 1 bis 3 erkennen, der in ein Gehäuse 3 gefügt ist. Zwischen den Wicklungsenden 23, die zwischen dem Blechpaketende 24 und dem Wickelkopf 4 verlaufen, sind Zwischenräume 6 vorhanden. FIG 4 lässt erkennen, dass beim Wickelkopfvergießen mit einer Vergussmasse 100 diese durch die Zwischenräume 6 in die Statorbohrung fließt, wenn kein Zusatzwerkzeug verwendet wird. Das Zusatzwerkzeug kann z.B. ein Dorn oder ein großes Kunststoffrohr sein, welches das Hineinfließen in die Statorbohrung verhindert. Das Zusatzwerkzeug muss immer abgedichtet sein und hängt von dem Durchmesser der Bohrung ab, ist also abhängig von der Motorgröße.

Die Polymerschicht 7 ist weder von dem Durchmesser der Bohrung noch von der Maschinengröße abhängig.

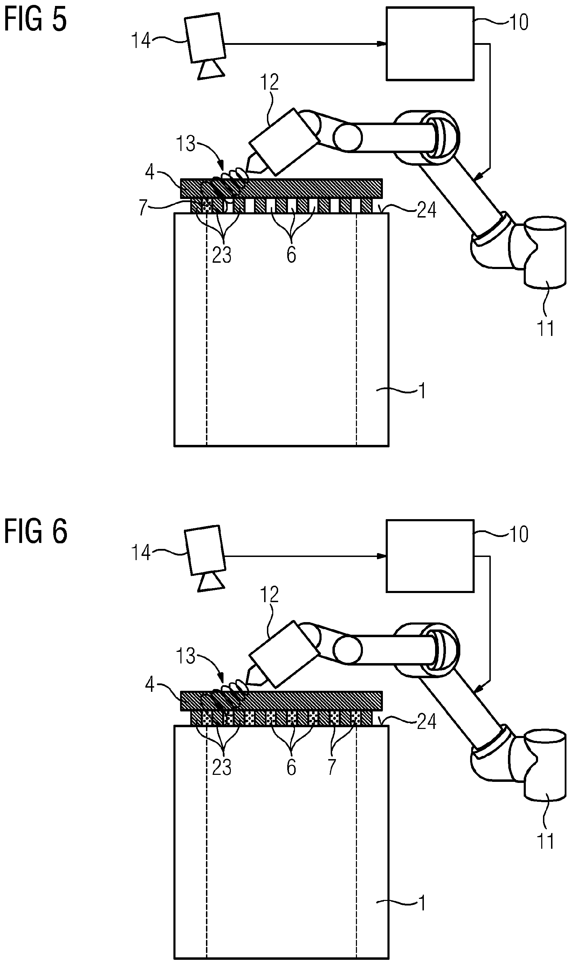

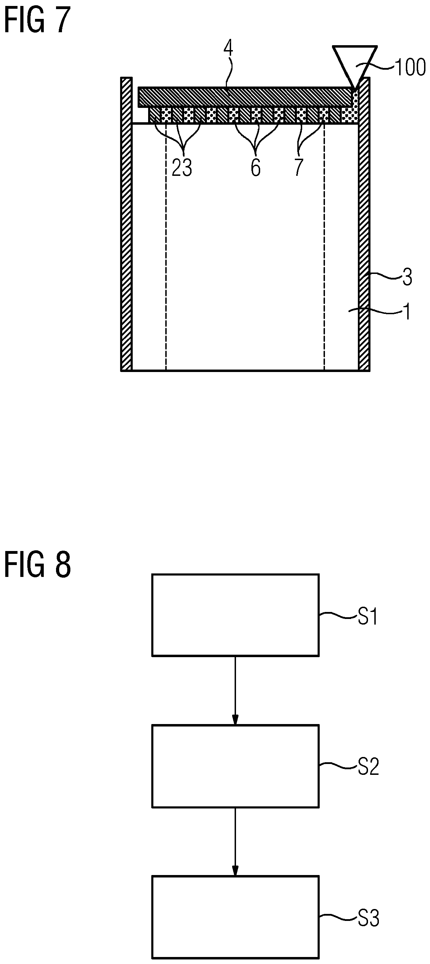

Figuren 5 bis 7 zeigen beispielhaft verschiedene Verfahrensschritte eines vollautomatisierten Wickelkopfvergussverfahrens, dessen Flussdiagramm in FIG 8 dargestellt ist.

Es wird also nun auf Figuren 5 bis 8 Bezug genommen.

FIG 5 zeigt den Stator 1 mit dem Wickelkopf 4. Darüber hinaus ist die Polymerschicht 7 zu erkennen, die einen einzigen Zwischenraum 6 zwischen zwei Wicklungsenden 23 überspannt.

Darüber hinaus zeigt FIG 5 eine Einrichtung 10, die einen ihr zugeordneten Roboterarm 11 steuert. An seinem freien Ende trägt der Roboterarm 11 eine Düse 12, der thermoplastischer Schmelzklebstoff zugeführt wird. Die Düse 12 kann auch einen Speicher mit thermoplastischen Schmelzklebstoff enthalten. Dabei wird mittels der Düse 12 ein Faden 13 des thermoplastischen Schmelzklebstoffs erzeugt. Während des Erzeugens wird die Düse 12 derart verfahren, dass der Faden 13 durch die Verfahrbewegung der Düse 12 beispielsweise auf den Zwischenraum 6 aufgetragen wird, um diese beispielsweise in Form einer Netzstruktur zu überspannen - Schritt S1 der FIG 8.

Dabei können bei dem Roboterarm 11 alle drei räumlichen Freiheitsgrade ausgenutzt werden. Der Faden 13 kann einen Durchmesser beispielsweise in einem Bereich zwischen 50 µm und 500 µm aufweisen.

Der thermoplastische Schmelzklebstoff kann der Düse 12 mit einem Arbeitsdruck zugeführt werden, der zwischen 1 bar und 10 bar liegt, und/oder mit einer Arbeitstemperatur, die zwischen 180°C und 220°C liegt.

In einem konkreten Versuch wurde beispielsweise ein Klebstoff auf der Basis eines Polyolefins mit einer Schmelztemperatur von ca. 200°C verwendet. Der Klebstoff wurde mit einer Arbeitstemperatur T von 220°C und einem Druck p von 3 bar aufgespritzt. Der Klebstoff trat mit einer Geschwindigkeit von ca. 5 m/s aus der Düse 30 aus. Der Abstand der Düse 14 von dem jeweiligen flächigen Bereich betrug ca. 8 cm, die Drehzahl der Düse 12 lag bei 600 U/min. Die Schlingen 13 hafteten sehr gut auf den Wicklungsenden 23 und führten zu einer vollständigen Überspannung der zu verschließenden Zwischenräumen 6.

Dieser Prozessschritt und auch die weiteren nachfolgend beschriebenen Prozessschritte können beispielsweise von einem optischen Erfassungssystem 14, beispielsweise von einer Kamera, z.B. von einer 3D-Kamera zwecks Kontrolle, beispielsweise Qualitätskontrolle erfasst werden. Das optische Erfassungssystem 14 ist der Einrichtung 10 zugeordnet. Die Einrichtung 10 kann dazu eingerichtet sein, das von dem optischen Erfassungssystem 14 Aufgenommene zu verarbeiten und/oder zu analysieren und basierend darauf die Steuerung des Roboterarms 11 dementsprechend anzupassen. Dabei können der erfasste Ort und der erfasste Verlauf der Zwischenräume 6 einer Einrichtung 10 zugeführt werden. Die Einrichtung 10 kann dadurch in der Lage sein, den erfassten Ort und den erfassten Verlauf der zu bespritzenden Zwischenräume 6 beim Verfahren der Düse 12 entsprechend zu berücksichtigen.

FIG 6 zeigt einen weiteren Prozessschritt, bei welchem der Faden 13 schichtweise und flächendeckend aufgeschleudert wird - Schritt S2 der FIG 8. Die Düse 12 wird so verfahren, dass die Polymerschicht 7 mehrere vorzugsweise alle Zwischenräume 6 überspannt. Die Polymerschicht 7 bleibt statorinnenseitig an den Wicklungsenden 23 haften.

Diese Art, die Polymerschicht 7 aufzutragen, ist auch dann möglich, wenn der Stator 1 bereits in das Gehäuse 3 gefügt ist.

Es versteht sich, dass die Polymerschicht 7 auch statoraußenseitig aufgetragen werden kann (hier nicht gezeigt).

FIG 7 zeigt einen Prozessschritt, bei welchem der Stator 1 in das Gehäuse 3 gefügt wird und sein Wickelkopf 4 mit einer Vergussmasse 100 vergossen wird - Schritt S3 der FIG 8. Dabei dringt die Vergussmasse 100 aufgrund der Polymerschicht 7 nicht in die für den Rotor vorgesehene Bohrung des Stators 1 ein.

Die Vergussmasse 100 ist ein besserer Wärmeleiter als die Luft und bindet den Wickelkopf 4 an das Gehäuse 3 thermisch an. Dadurch die Anzahl der im Betrieb im Wickelkopf entstehenden Hotspots deutlich reduziert.

Darüber hinaus kann die Polymerschicht 7, nachdem die Vergussmasse 100 ausgehärtet ist, zumindest teilweise abgezogen werden.

Der mit dem Gehäuse 3 fertig vergossene Stator 1 kann anschließend bei einer elektrischen vorzugsweise rotatorischen Maschine verwendet werden. Eine elektrische vorzugsweise rotatorischen Maschine mit dem mit dem Gehäuse 3 vergossenen Stator 1 ist somit ein Teil der vorliegenden Offenbarung.

Zusammengefasst, ermöglichen der hier beschriebene Stator und die hier beschriebenen Verfahren, eine Einhausung durch z.B. einen Innendorn als Vergusswerkezeug, welche bei herkömmlichen Vergussprozessen sehr aufwändig ist, da sie varianzabhängig ist, einzusparen.

Die Polymerschicht ist varianzunabhängig und kann vollautomatisiert aufgebracht werden. Außerdem kann die Polymerschicht zumindest teilweise oder fast vollständig recyclet werden.

Der Wickelkopfverguss stellt sich somit nichtmehr als aufwändiger, großteils händischer, Prozess dar, sondern kann komplett automatisiert vollzogen werden.

Hierdurch wird es kostengünstig und kosteneffizient realisierbar kleinere Achshöhen mit hoher Variantenvielfalt mittels eines Wickelkopfvergusses thermisch zu verbessern, sodass eine höhere Leistungsklasse erreicht werden kann oder die generelle Betriebstemperatur bei gleicher Leistung gesenkt wird, was im Umkehrschluss zu einer höheren Lebensdauer der Maschine führt.

Obwohl die Erfindung im Detail durch bevorzugte Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen. Beispielsweise können jene Merkmale, die im Kontext der Verfahren offenbart wurden, auch zur Weiterbildung des beschriebenen Stators verwendet werden und umgekehrt.

## Patentansprüche

1. Verfahren zum Vergießen eines Wickelkopfs (4) eines Stators (1), wobei
- ein Stator (1) bereitgestellt wird, der ein Blechpaket (2) mit Nuten (21) und einen Wickelkopf (4) aufweist, wobei in die Nuten (21) Wicklungen (22) eingebracht sind, wobei der Wickelkopf (4) aus aus den Nuten (21) austretenden Wicklungsenden (23) gebildet ist und einen Abstand (5) zu einem Blechpaketende (24) aufweist, wobei die Wicklungsenden (23) in einem Bereich zwischen dem Blechpaketende (24) und dem Wickelkopf (4) derart verlaufen, dass in diesem Bereich zwischen den Wicklungsenden (23) Zwischenräume (6) entstehen,
- der Stator (1) in ein Gehäuse (3) einer elektrischen Maschine gefügt wird, und der Wickelkopf (4) des Stators (1) mit einer Vergussmasse vergossen wird,
**dadurch gekennzeichnet, dass**
- zumindest einer der Zwischenräume (6) mit einer Polymerschicht (7) vor dem Vergießen derart überspannt wird, dass ein Durchfluss von einer Vergussmasse (100) durch den zumindest einen überspannten Zwischenraum (6) durch verhindert wird.

2. Verfahren nach Anspruch 1, wobei die Polymerschicht (7) nach dem Vergießen und Aushärten der Vergussmasse zumindest teilweise entfernt wird.

3. Verfahren nach Anspruch 1 oder 2, wobei die Polymerschicht (7) durch Aufspritzen und/oder Aufschleudern und/oder Aufsprühen eines klebstoffhaltigen Mediums mittels einer Düse (12) erzeugt wird.

4. Verfahren nach einem der Ansprüche 1 bis 3, wobei während des Erzeugens die Düse (12) derart verfahren wird, dass das klebstoffhaltige Medium durch die Verfahrbewegung der Düse (12) derart schichtweise und flächendeckend aufgetragen wird, dass das klebstoffhaltige Medium den zumindest einer der Zwischenräume (6) überspannt.

5. Verfahren nach einem der Ansprüche 1 bis 4, wobei mittels einer Düse (12) ein Faden (13) eines thermoplastischen Schmelzklebstoffs erzeugt wird, wobei während des Erzeugens die Düse (12) derart verfahren wird, dass der Faden (13) durch die Verfahrbewegung der Düse (12) derart aufgetragen wird, dass der Faden in Form überlappender Schleifen aufgeschleudert wird, um eine Netzstruktur zu bilden, wobei die Netzstruktur den zumindest einen der Zwischenräume (6) überspannt.

6. Verfahren nach einem der Ansprüche 1 bis 5, wobei alle Zwischenräume (6) mit einer Polymerschicht (7) abgedeckt werden.

7. Verfahren nach einem der Ansprüche 1 bis 6, wobei die Polymerschicht (7) statorinnenseitig und/oder statoraußenseitig angebracht wird.

8. Verfahren nach einem der Ansprüche 1 bis 7, wobei das Auftragen des thermoplastischen Schmelzklebstoffs vollautomatisch, insbesondere mit einem Roboter (11) erfolgt.

## Claims

1. Method for encapsulating a winding overhang (4) of a stator (1), wherein
- a stator (1) is provided, which comprises a laminated core (2) with grooves (21) and a winding overhang (4), wherein windings (22) are inserted in the grooves (21), wherein the winding overhang (4) is formed from winding ends (23) protruding from the grooves (21) and is at a distance (5) from a laminated core end (24), wherein, in a region between the laminated core end (24) and the winding overhang (4), the winding ends (23) run in such a way that, in said region, intermediate spaces (6) are formed between the winding ends (23),
- the stator (1) is included in a housing (3) of an electric machine and the winding overhang (4) of the stator (1) is encapsulated with an encapsulating compound,
**characterised in that**
- at least one of the intermediate spaces (6) is spanned by a polymer layer (7) before the encapsulation such that a flow of encapsulating compound (100) through the at least one spanned intermediate space (6) is prevented.

2. Method according to claim 1, wherein the polymer layer (7) is at least partially removed after the encapsulation and curing of the encapsulating compound.

3. Method according to claim 1 or 2, wherein the polymer layer (7) is produced by spraying-on and/or spinning-on and/or spray-coating an adhesive-containing medium by means of a nozzle (12).

4. Method according to one of claims 1 to 3, wherein, during production, the nozzle (12) is moved in such a way that the adhesive-containing medium is applied by the movement of the nozzle (12) in layers and over a large area such that the adhesive-containing medium covers the at least one of the intermediate spaces (6).

5. Method according to one of claims 1 to 4, wherein a thread (13) of a thermoplastic hot melt adhesive is produced by means of a nozzle (12), wherein, during production, the nozzle (12) is moved in such a way that the thread (13) is applied by the movement of the nozzle (12) such that the thread is spun-on in the form of overlapping loops in order to form a network structure, wherein the network structure covers the at least one of the intermediate spaces (6).

6. Method according to one of claims 1 to 5, wherein all intermediate spaces (6) are spanned by a polymer layer (7).

7. Method according to one of claims 1 to 6, wherein the polymer layer (7) is applied on the inner side of the stator and/or on the outer side of the stator.

8. Method according to one of claims 1 to 7, wherein the application of the thermoplastic hot melt adhesive takes place fully automatically, in particular by means of a robot (11).

## Revendications

1. Procédé de coulée d'une tête (4) de bobine d'un stator (1), dans lequel
- on se procure un stator (1), qui a un paquet (2) de tôles ayant des encoches (21) et une tête (4) de bobine, dans lequel on introduit des enroulements (22) dans les encoches (21), dans lequel la tête (4) de bobine est formée à partir des extrémités (23) d'enroulement sortant des encoches (21) et à une distance (5) d'une extrémité (24) du paquet de tôles, dans lequel les extrémités (23) d'enroulement s'étendent dans une partie comprise entre l'extrémité (24) du paquet de tôles et la tête (4) de bobine, de manière à créer dans cette partie des espaces (6) intermédiaires entre les extrémités (23) de bobine,
- on adapte le stator (1) dans une carcasse (3) d'une machine électrique et on coule la tête (4) de bobine du stator (1) avec une composition de coulée,
**caractérisé en ce que**
- on recouvre, avant la coulée, au moins des espaces (6) intermédiaires d'une couche (7) de polymère, de manière à empêcher la composition (100) de coulée de passer dans le au moins un espace (6) intermédiaire recouvert.

2. Procédé suivant la revendication 1, dans lequel on élimine au moins en partie la couche (7) de polymère, après la coulée et le durcissement de la composition de coulée.

3. Procédé suivant la revendication 1 ou 2, dans lequel on produit, au moyen d'une buse (12), la couche (7) de polymère par projection et/ou centrifugation et/ou pulvérisation d'un milieu contenant de la colle.

4. Procédé suivant l'une des revendications 1 à 3, dans lequel, pendant la production, on déplace la buse (12), de manière à déposer, couche par couche et en recouvrant la surface, le milieu contenant de la colle par le mouvement de déplacement de la buse (12), de manière à ce que le milieu contenant de la colle recouvre le au moins un des espaces (6) intermédiaires.

5. Procédé suivant l'une des revendications 1 à 4, dans lequel, au moyen d'une buse (12), on produit un fil (13) d'une colle fusible thermoplastique, dans lequel, pendant la production, on déplace la buse (12), de manière à déposer le fil (13) par le mouvement de déplacement de la buse (12), de manière à centrifuger le fil sous la forme de boucles, qui se chevauchent afin de former une structure en réseau, dans laquelle la structure en réseau recouvre le au moins un des espaces (6) intermédiaires.

6. Procédé suivant l'une des revendications 1 à 5, dans lequel on recouvre tous les espaces (6) intermédiaires d'une couche (7) de polymère.

7. Procédé suivant l'une des revendications 1 à 6, dans lequel on met la couche (7) de polymère du côté intérieur du stator et/ou du côté extérieur du stator.

8. Procédé suivant l'une des revendications 1 à 7, dans lequel le dépôt de la colle fusible thermoplastique s'effectue d'une manière entièrement automatique, en particulier par un robot (11).
